(19) Europäisches Patentamt
European Patent Office
Office européen des brevets

(11) EP 0 499 927 B1

(12) EUROPÄISCHE PATENTSCHRIFT

(45) Veröffentlichungstag und Bekanntmachung des Hinweises auf die Patenterteilung:
**16.07.1997 Patentblatt 1997/29**

(51) Int Cl.[6]: **C08L 69/00**, C08L 67/00, C08L 51/04

(21) Anmeldenummer: **92102157.2**

(22) Anmeldetag: **10.02.1992**

(54) **Benzinbeständige Polycarbonat-Formmassen**

Gasoline resistant polycarbonate mouldings

Masses à mouler résistant à l'essence

(84) Benannte Vertragsstaaten:
**DE FR GB IT**

(30) Priorität: **21.02.1991 DE 4105429**

(43) Veröffentlichungstag der Anmeldung:
**26.08.1992 Patentblatt 1992/35**

(73) Patentinhaber: **BAYER AG**
**51368 Leverkusen (DE)**

(72) Erfinder:
- **Wittmann, Dieter, Dr.**
  **W-5000 Köln 80 (DE)**
- **Piejko, Karl-Erwin, Dr.**
  **W-5060 Bergisch Gladbach 2 (DE)**
- **Lindner, Christian, Dr.**
  **W-5000 Köln 80 (DE)**
- **Eckel, Thomas, Dr.**
  **W-4047 Dormagen 1 (DE)**

(56) Entgegenhaltungen:
**EP-A- 0 415 199**

- **WPI, Derwent Publications Ltd., London (GB); AN 80-87161c(49)**
- **CHEMICAL ABSTRACTS, Band 90, Nr. 16, Columbus, OH (US); AN 122459k**
- **WPIL, Derwent Publications Ltd., London (GB); AN 88-033081(05)**

Bemerkungen:
Die Akte enthält technische Angaben, die nach dem Eingang der Anmeldung eingereicht wurden und die nicht in dieser Patentschrift enthalten sind.

EP 0 499 927 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Thermoplastische Formmassen aus Polycarbonaten und ABS-Polymerisaten sind seit langem bekannt. So beschreibt beispielsweise DE-A 1 170 141 die gute Verarbeitbarkeit von Formmassen aus Polycarbonaten und Pfropfpolymerisaten von Monomermischungen aus Acrylnitril und einem aromatischen Vinylkohlenwasserstoff auf Polybutadien (Emulsions-ABS).

Gemäß US 4 624 986 weisen Formmassen aus ABS-Polymerisaten, die nach dem Masse- oder Masse-Suspensions-Verfahren hergestellt wurden, und Polycarbonaten verbesserte Tieftemperatureigenschaften und verminderten Glanz auf.

Für eine Reihe von Anwendungen im Bereich der KFZ-Außenteile ist jedoch die Beständigkeit konventioneller Polycarbonat/ABS-Formmassen gegenüber Kraftstoffen und Schmiermitteln nicht ausreichend. Bei unter Spannung stehenden Formteilen kann es nach Einwirkung der genannten lipophilen Substanzen zu Rißbildung und Bruch kommen (Spannungsrißkorrosion).

DE-OS 37 38 143 lehrt die Verwendung spezieller, mit einem Redox-Aktivatorsystem aus Ascorbinsäure und organischem Hydroperoxid hergestellter ABS-Pfropfpolymerisate zur Verbesserung der Benzinbeständigkeit von Polycarbonat-Formmassen.

Als mögliche Zusätze zur Verbesserung der Beständigkeit von Polycarbonat-Formmassen gegenüber Kraftstoffen werden Polyurethane (EP 0 104 695), hydrierte Nitrilkautschuke (EP 0 285 984) sowie teilkristalline Polymere wie Polyamide in Kombination mit Styrol-Maleinsäureanhydrid-Copolymerisaten (JP 58 008 760) oder Polyalkylenterephthalate (EP 0 064 648) genannt.

Schwerwiegende Nachteile der Formmassen des Standes der Technik können zum einen mangelnde thermische Belastbarkeit bzw. Verarbeitungsstabilität (Polyurethan, Polyamid und Polyalkylenterephthalat enthaltende Polycarbonat-Abmischungen), aber auch hohe Herstellkosten und Delamination am Formteil (hydrierte Nitrilkautschuke) oder ungünstiges Fließverhalten sein (Redox-Pfropfpolymerisate der DE-OS 37 38 143).

Aufgabe der zugrundeliegenden Anmeldung war es demzufolge, ein die Benzinbeständigkeit von Polycarbonat/ABS-Formmassen verbesserndes Additiv zu entwickeln, das mit Polycarbonat/ABS gut verträglich, einfach und aus kostengünstigen Rohstoffen zugänglich und unter den Verarbeitungsbedingungen stabil sein sollte.

Überraschenderweise fanden wir nun, daß durch Zusatz spezieller Polymerisate auf Basis von (Meth)Acrylsäure-$C_{10}$-$C_{40}$-Alkylestern zu Formmassen aus aromatischen Polycarbonaten und/oder Polyestercarbonaten und/oder Polyestern und Pfropfpolymerisaten die Benzinbeständigkeit sowie die Kerbschlagzähigkeit deutlich verbessert wird.

Gegenstand der vorliegenden Erfindung sind demzufolge Formmassen, bestehend aus

A) 10 bis 96, vorzugsweise 30 bis 80 Gew.-Teilen eines aromatischen Polycarbonats und/oder eines aromatischen Polyestercarbonats und/oder eines aromatischen Polyesters

B) 4 bis 90, vorzugsweise 10 bis 50 Gew.-Teilen eines Pfropfpolymerisats von

B.1) 5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1) 50 bis 99 Gew.-Teilen mindestens eines Monomeren aus der Gruppe der Vinylaromaten und Methacrylsäure-$C_1$-$C_4$-Alkylester und

B.1.2) 1 bis 50 Gew.-Teilen mindestens eines Monomeren aus der Gruppe der Vinylcyanide, (Meth)Acrylsäure-$C_1$-$C_8$-Alkylester, sowie der ethylenisch ungesättigten Carbonsäuren und der davon abgeleiteten Derivate wie Anhydride und Imide, auf

B.2) 5 bis 95 Gew.-Teile einer vernetzten, teilchenförmigen elastomeren Pfropfgrundlage mit einem durchschnittlichen Teilchendurchmesser ($d_{50}$-Wert) von 0,05 bis 5 µm, vorzugsweise 0,1 bis 0,6 µm und einer Glasübergangstemperatur < 10°C, und

C) 0 bis 70, vorzugsweise 0 bis 50 Gew.-Teile eines thermoplastischen Vinylcopolymerisats aus

C.1) 50 bis 99 Gew.-Teilen mindestens eines Monomeren aus der Gruppe der Vinylaromaten und Methacrylsäure-$C_1$-$C_4$-Alkylester und

C.2) 1 bis 50 Gew.-Teilen mindestens eines Monomeren aus der Gruppe der Vinylcyanide, (Meth)Acrylsäure-$C_1$-$C_8$-Alkylester, sowie der ethylenisch ungesättigten Carbonsäuren und den davon abgeleiteten Derivaten wie Anhydride und Imide,

wobei die Summe der Gew.-Teile aus A + B + C 100 Gew.-Teile beträgt,

sowie, bezogen auf 100 Gew.-Teile aus A und B und gegebenenfalls C

D) 0,1 bis 30, vorzugsweise 0,5 bis 20, besonders bevorzugt 1 bis 10 Gew.-Teile eines Polymerisats bestehend aus

D.1) (Meth)Acrylsäure-$C_{10}$-$C_{40}$-Alkylestern enthalten, wobei

D.2) bis zu 90 Gew.-%, vorzugsweise von 0 bis 85 Gew.-%, insbesondere von 10 bis 80 Gew.-% der Komponente D.1 durch Styrol ersetzt sein können,

und wobei die Polymerisate D) eine Sprödigkeitstemperatur von über + 2°C, vorzugsweise von über + 10°C haben müssen, sowie gegebenenfalls E mindestens einem Zusatz aus der Gruppe der Stabilisatoren, Pigmente, Entformungsmittel, Fließhilfsmittel, Fäll- und Verstärkungsstoffe, Flammschutzmittel und Antistatika.

Bevorzugte Alkylester der (Meth)Acrylsäure gemäß D.1) sind solche von $C_{12}$-$C_{30}$-Alkoholen, insbesondere von $C_{14}$-$C_{28}$-Alkoholen und ganz besonders von $C_{16}$-$C_{26}$-Alkoholen.

Komponente A

Aromatische Polycarbonate und/oder aromatische Polyestercarbonate und/oder aromatische Polyester gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyester z.B. DE-OS 2 940 024, zur Herstellung aromatischer Polyestercarbonate z.B. DE-OS 3 007 934).

Die Herstellung aromatischer Polycarbonate und/oder aromatischer Polyestercarbonate und/oder aromatischer Polyester erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Mitverwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate und/oder aromatischen Polyester sind vorzugsweise solche der Formel (I)

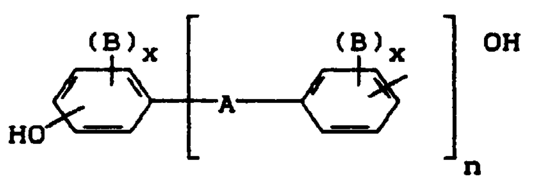

(I)

wobei

"A" eine Einfachbindung, ein $C_1$-$C_5$-Alkylen, ein $C_2$-$C_5$-Alkyliden, ein $C_5$-$C_6$-Cycloalkyliden, -O-, -SO-,

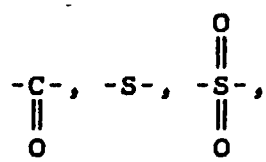

die alkylsubstituierten $C_4$-$C_7$-Cycloalkylidene der DE-OS 3 832 396 oder ein Rest der Formel (II)

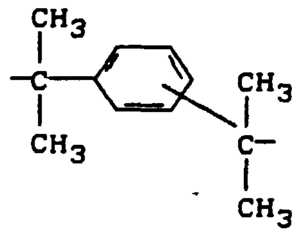

(II)

"B" Chlor, Brom,

"X" 0, 1 oder 2 und "n" 1 oder 0 sind.

Bevorzugte Diphenole sind somit Hydrochinon, Resorcin, Dihydroxydiphenyle, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropylbenzole sowie deren kernbromierte und/oder kernchlorierte Derivate.

Die wichtigen Diphenole sind Bisphenol-A, 2,4-Bis-(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzen Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden,

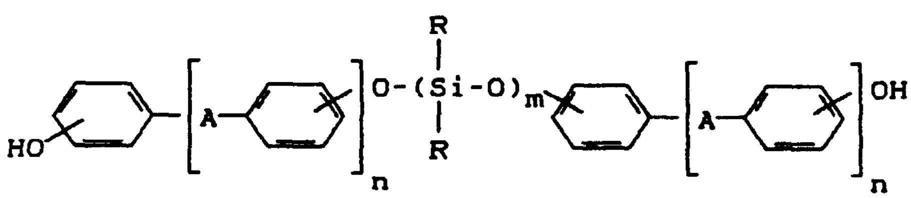

(III)

worin

-A- die für Formel (I) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist. Polydiorganosiloxane mit Hydroxy-aryloxy-Endgruppen gemäß Formel (III) sind bekannt (s. beispielsweise US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol A-Homopolycarbonaten die Copolycarbonate von Bisphenol A mit bis zu 15 Mol-%, bezogen auf die Molsummen an Diphenolen, an den anderen der wichtigsten Diphenole, insbesondere an 2,2-Bis-(3,5-dibrom-4-hydroxyphenyl)-propan.

Aromatische Dicarbonsäuredihalogenide zur Herstellung der thermoplastischen, aromatischen Polyester und thermoplastischen, aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1 : 20 und 20 : 1.

Für die Herstellung der aromatischen Polyester werden die Dicarbonsäuredihalogenide als einzige bifunktionelle Säurederivate verwendet; bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyester und Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in bekannter Weise verzweigt sein. (S. dazu ebenfalls DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäurdichloride) oder 3- oder mehrfunktionelle Phenole, wie Phloroglucin, 4,6-Dimethyl-2,4,6-tri-(4-hydroxyphenyl)-hepten-2, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis (2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4''-dihydroxytriphenyl)-methyl]-benzol, in Mengen von 0,01 bis 1,0 Mol% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyester und aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25°C).

Die thermoplastischen, aromatischen Polycarbonate und/oder Polyestercarbonate und/oder Polyester können allein oder im beliebigen Gemisch untereinander eingesetzt werden.

<u>Komponente B</u>

Die erfindungsgemäßen Komponenten B sind Pfropfcopolymerisate von Monomeren B.1 auf kautschukelastischen Grundlagen B.2.

Monomere B.1 sind B.1.1 Vinylaromaten wie beispielsweise Styrol, α-Methylstyrol, kernsubstituiertes Styrol wie p-Methylstyrol, p-Chlorstyrol sowie Methacrylsäure-($C_1$-$C_4$)-Ester wie zum Beispiel Methylmethacrylat, Ethylmethacrylat oder Mischungen dieser Monomere, Beispiele für Monomere B.1.2 sind Vinylcyanide (ungesättigte Nitrile) wie Acrylnitril und Methacrylnitril, (Meth)-Acrylsäure-($C_1$-$C_8$)-Ester wie zum Beispiel Methylmethacrylat, n-Butylacrylat, t-Butylacrylat, ungesättigte Carbonsäuren wie Maleinsäure sowie Derivate (wie Anhydride und Imide) ungesättigter Carbonsäuren, beispielsweise Maleinsäureanhydrid und N-Phenyl-Maleinimid oder Mischungen der genannten Monomere.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B. 2 unterhalb 10°C, vorzugsweise unterhalb -10°C liegt. Besonders bevorzugt wird reiner Polybutadienkautschuk.

Besonders bevorzugte Polymerisate B sind z.B. ABS-Polymerisate, wie sie z.B. in der DE-OS 2 035 390 (= US-PS 3 644 574) oder in der DE-OS 2 248 242 (= GB-PS 1 409 275) beschrieben sind. Der Gelanteil der Pfropfgrundlage B.2 beträgt mindestens 60 Gew.-% (in Toluol gemessen), der mittlere Teilchendurchmesser $d_{50}$ des Pfropfpolymerisats B 0,05 bis 5 µm, vorzugsweise 0,1 bis 0,6 µm.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomere in Gegenwart der Pfropfgrundlage gewonnen werden.

Geeignete Acrylatkautschuke B.2 der Polymerisate B sind vorzugsweise Polymerisate aus Acrylsäurealkylestern, gegebenenfalls mit bis zu 40 Gew.-%, bezogen auf B.2, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 37 04 657, DE-OS 37 04 655, DE-OS 36 31 540 und DE-OS 36 31 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782 bis 796) bestimmt werden.

Komponente C

Geeignete Komponenten C sind (Co)Polymerisate von mindestens einem Monomeren aus C.1 50 bis 99 Gew.-Teilen Vinylaromaten wie beispielsweise Styrol, α-Methylstyrol, kernsubstituiertes Styrol wie p-Methylstyrol, p-Chlorstyrol, sowie Methacrylsäure-($C_1$-$C_4$)-Ester wie zum Beispiel Methylmethacrylat, Ethylmethacrylat oder Mischungen dieser Monomere, und C.2 1 bis 50 Gew.-Teilen Vinylcyanide (ungesättigte Nitrile) wie Acrylnitril und Methacrylnitril, (Meth)Acrylsäure-($C_1$-$C_8$)-Ester wie zum Beispiel Methylmethacrylat, n-Butylacrylat, t-Butylacrylat, ungesättigte Carbonsäuren wie Maleinsäure sowie Derivate (wie Anhydride und Imide) ungesättigter Carbonsäuren, beispielsweise Maleinsäureanhydrid und N-Phenyl-Maleinimid oder Mischungen der genannten Monomere.

Die (Co)Polymerisate C sind harzartig, thermoplastisch und kautschukfrei.

Bevorzugte (Co)Polymerisate C umfassen Copolymerisate aus

C.1 50 bis 90 Gew.-% Styrol, α-Methylstyrol, Methylmethacrylat oder Mischungen daraus, und
C.2 10 bis 50 Gew.-% (Meth) Acrylnitril, Methylmethacrylat, Maleinsäureanhydrid oder Mischungen daraus, besonders bevorzugt ist das Copolymerisat aus C.1 Styrol und C.2 Acrylnitril.

Copolymerisate gemäß Komponente C entstehen häufig bei der Pfropfpolymerisation der Komponente B als Nebenprodukte, besonders dann, wenn große Mengen Monomere B.1 auf kleine Mengen Kautschuk B.2 gepfropft werden.

Die erfindungsgemäß einzusetzende Menge an C bezieht diese Nebenprodukte der Pfropfpolymerisation von B nicht mit ein.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisate gemäß Komponente C besitzen vorzugsweise Molekulargewichte $M_w$ (Gewichtsmittel, ermittelt durch Lichtstreuung oder Sedimentation) zwischen 15.000 und 200.000.

Komponente D

Die erfindungsgemäß einzusetzenden thermoplastischen Polymerisate sind entweder als solche bereits bekannt oder nach bekannten Verfahren erhältlich (siehe beispielsweise GB-OS 2 076 171 oder DE-AS 2 724 360).

Die $C_{10}$-$C_{40}$-Alkylreste in den Monomeren D.1) können linear oder verzweigt, ungesättigt oder gesättigt sein, bevorzugt sind lineare, gesättigte $C_{10}$-$C_{40}$-Alkylreste. Geeignete Alkylreste sind beispielsweise Octadecyl, 1-Eicosanyl und 1-Docosanyl.

Bevorzugte Monomere D.1) sind beispielsweise Stearylacrylat, Behenylacrylat bzw. 1-Docosanylacrylat und Eicosanylacrylat und die entsprechenden Ester der Methacrylsäure wie Stearylmethacrylat, 1-Docosanylmethacrylat und Eicosanylmethacrylat.

Geeignete Monomere D.2) sind Styrol, α-Methylstyrol, p-Methylstyrol oder p-Chlorstyrol.

Bevorzugte Monomere D.2) sind Styrol und p-Methylstyrol.

Die unvernetzten Polymerisate D) aus den Monomeren D.1) und gegebenenfalls D.2) sollen Sprödigkeitstemperaturen von mehr als + 2°C, vorzugsweise von mehr als + 10°C haben.

Die Sprödigkeitstemperaturen sind im Falle rein amorpher Polymere gleichzusetzen mit deren Glastemperaturen (zu den Glastemperaturen von Polymeren siehe "Polymer Handbook", 2, Aufl., Wiley & Sons, New York 1975, S. III/139f). Polymere, enthaltend die Monomeren D.1), können jedoch ab bestimmten C-Kettenlängen der Alkoholreste der Monomeren D.1) und von bestimmten Anteilen der Monomeren D.1) an teilkristallin vorliegen; die Sprödigkeit der Polymerisate wird in diesen Fällen auch durch die Menge der kristallinen Anteile und deren Schmelztemperatur beeinflußt (zu den Glas- und Schmelztemperaturen von Copolymeren mit zur Kristallisation befähigten Monomeren (mit den Beispielen Octadecylacrylat/Methylmethacrylat) s. E. F. Jordan jr., B. Artymyshyn, A. Speca, A.N. Wrigley, J. Polym. Sci. A-1, Vol.1, 3319-3365 (1971) und E.F. Jordan jr., ibid, 3367-3378).

Die Zusammensetzung der Polymerisate D), enthaltend Monomere D.1), die unterschiedliche C-Kettenlängen der Alkoholreste besitzen können, und gegebenenfalls Monomere D.2) bzw. D.3) muß auf alle Fälle so gewählt werden, daß die Glastemperatur der Polymerisate mehr als +2°C, vorzugsweise mehr als +10°C beträgt oder daß die C-Kettenlängen der Alkoholreste der Monomeren D.1) so groß sind und die Anteile dieser Monomeren im Polymerisat so hoch sind, daß die Polymerisate kristalline Phasen enthalten und damit kein Elastomer darstellen.

Die Glastemperaturen der Polymerisate bzw. das Vorliegen kristalliner Phasen lassen sich beispielsweise durch differentielle Thermoanalyse bestimmen.

Die Herstellung der Komponente D) kann nach beliebigen Polymerisationsverfahren in Masse, Lösung, Wasser, Suspension, Dispersion und Emulsion radikalisch, thermisch oder ionisch erfolgen. Bevorzugt wird die Komponente D) in Masse oder in Emulsion hergestellt.

Im Falle der bevorzugten Emulsionspolymerisation wird vorzugsweise so vorgegangen, daß aus einer Lösung der Monomeren D.1) und gegebenenfalls D.2) beziehungsweise D.3), die bis zu 100 Gew.-%, vorzugsweise bis zu 50 Gew.-% und insbesondere bis zu 25 Gew.-%, bezogen auf die Gewichtssumme der zu polymerisierenden Monomeren der Komponente D), eines inerten organischen Lösungsmittels enthält, und einer wäßrigen Lösung geeigneter Emulgatoren mittels Rührwerken, Emulgiermaschinen, beispielsweise Homogenisatoren, oder mittels Verdüsen eine Voremulsion hergestellt wird.

Entsprechende Emulgieraggregate sind dem Fachmann bekannt. Als Emulgatoren sind anionische, kationische oder nichtionische geeignet wie beispielsweise höhere aliphatische Fettsäuren, organische Sulfonsäuren oder Schwefelsäurehalbester, Alkylammoniumsalze, polyethoxylierte Phenolderivate oder aliphatische polyethoxylierte Polyetherblockpolymere. Das Verhältnis der wäßrigen zur organischen Phase der Voremulsion kann dabei in weiten Grenzen

variieren; bevorzugt liegt das Verhältnis der wäßrigen zur organischen Phase zwischen 9/1 und 1/1. Die Voremulsion wird dann mit Hilfe üblicher Radikalinitiatoren unter Anwendung üblicher Bedingungen kontinuierlich, halbkontinuierlich oder batchweise polymerisiert.

Die Einstellung des Molekulargewichts der Komponente D) kann durch verschiedene Maßnahmen erreicht werden, wie Temperatur, Monomerkonzentration, Startermenge oder durch Einsatz sogenannter Regler, wie Organoschwefel-Verbindungen, beispielsweise Mercaptane und/oder Disulfide, wobei langkettige Mercaptane wie n- oder tert.-Dodecylmercaptane vorteilhaft sind.

Die Regler werden normalerweise im Monomergemisch gelöst und die Mischung danach polymerisiert. Eine derartige Molekulargewichtseinstellung von Vinylpolymeren ist dem Fachmann geläufig.

Die erfindungsgemäßen Formmassen können darüber hinaus weitere bekannte Zusätze wie Stabilisatoren, Pigmente, Entformungsmittel, Fließhilfsmittel, Füll- und Verstärkungsstoffe, Flammschutzmittel und Antistatika in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen wie Innenknetern, Extrudern oder Doppelwellenschnecken schmelzcompoundiert oder schmelzextrudiert.

Die erfindungsgemäßen Formmassen können zur Herstellung von Formkörpern jeder Art, z.B. durch Spritzgießen oder Extrusionsblasen, verwendet werden. Beispiele für Formkörper sind: Gehäuseteile (z.B. für Haushaltsgeräte wie Saftpressen, Kaffeemaschinen, Mixer), Abdeckplatten für das Baugewerbe und insbesondere Automobilteile. Sie werden außerdem für elektrische Geräte, z.B. für Steckerleisten eingesetzt, weil sie sehr gute elektrische Eigenschaften haben.

Formkörper können auch durch Tiefziehen aus vorher hergestellten Platten oder Folien hergestellt werden.

Ein weiterer Gegenstand der Erfindung ist also die Verwendung der beschriebenen Formmassen zur Herstellung von Formkörpern.

Beispiel

1. Eingesetzte Komponenten

Angegebene Teile bedeuten Gewichtsteile.

Komponente A

Lineares Polycarbonat auf Basis Bisphenol A mit einer relativen Lösungsviskosität $\eta_{rel}$ = 1,26 bis 1,28, gemessen in Methylenchlorid bei 25°C und in einer Konzentration von 0,5 g/100 ml.

Komponente B

B.I

SAN-Pfropfpolymerisat von 45 Gew.-% Styrol-Acrylnitril-Gemisch (im Gew.-Verhältnis von 72:28) auf 55 Gew.-% teilchenförmiges Polybutadien einer mittleren Teilchengröße ($d_{50}$) von 0,4 µm, erhalten durch Emulsionspolymerisation (Herstellung analog Beispiel B.II der DE-OS 37 38 143).

B.II

SAN-Pfropfpolymerisat von 45 Gew.-% Styrol-Acrylnitril-Gemisch (im Gew.-Verhältnisvon 72:28) auf 55 Gew.-% teilchenförmiges Polybutadien einer mittleren Teilchengröße ($d_{50}$) von 0,4 µm, erhalten durch Emulsionspolymerisation mit einem Redox-Aktivatorsystem aus Cumolhydroperoxid und Ascorbinsäure (Herstellung analog Beispiel B.I der DE-OS 37 38 143).

Komponente C

Styrol/Acrylnitril-Copolymerisat mit einem Styrol/Acrylnitril-Gewichts-Verhältnis von 72:28 und einer Grenzviskosität von ($\eta$) = 0,55 dl/g (Messung in Dimethylformamid bei 20°C).

Komponente D

D.I

Eine Mischung aus 700 g Stearylmethacrylat, 700 g Styrol und 3 g tert.-Dodecylmercaptan wird mit Hilfe eines Hochgeschwindigkeitsrührers in einer Lösung aus 25 g Natriumsalz von $C_{14}$-$C_{18}$-Alkylsulfonsäuren in 2.810 g Wasser emulgiert.

Ein Fünftel dieser Emulsion wird unter Rühren und unter einem leichten Stickstoffstrom auf 75°C erhitzt und mit einer Lösung aus 6 g Kaliumperoxodisulfat in 140 g Wasser versetzt. Innerhalb von zwei Stunden werden die restliche Emulsion und eine Lösung aus 12 g Natriumsalz von $C_{14}$-$C_{18}$-Alkylsulfonsäuren in 400 g Wasser gleichmäßig bei 75°C zudosiert. Anschließend wird vier Stunden bei 75°C auspolymerisiert. Es wird ein Latex mit einem Feststoffgehalt von 29 Gew.-% erhalten.

Das Polymerisat wird nach Zusatz von 12 g phenolischem Antioxidans mit wäßriger Magnesiumsulfatlösung koaguliert, gewaschen und getrocknet. Man erhält 1.380 g Polymerisatpulver mit einem L-Wert von 55.

Der L-Wert ist definiert als ($\eta_{rel}$ - 1/0,005) mit $\eta_{rel}$ = relative Lösungsviskosität, gemessen in Dimethylformamid bei 25°C und einer Konzentration von 0,005 g/cm$^3$). Schmelzpunkt (DSC), d.h. Sprödigkeitstemperatur: 41°C.

D.II

Zur Herstellung des Polymerisats D.II, die im übrigen analog zur Herstellung von D.I erfolgte, wurde folgende Monomermischung verwendet:

| | |
|---|---|
| 1.400 g | Stearylmethacrylat |
| 7 g | tert.-Dodecylmercaptan |

Die Zeit zum Auspolymerisieren betrug 10 Stunden. Schmelzpunkt (DSC), d.h. Sprödigkeitstemperatur: 56°C.

2. Herstellung und Prüfung der erfindungsgemäßen Formmassen

Die Komponenten A, B, C und D wurden auf einem 3,9 l Innenkneter bei Temperaturen zwischen 210 und 250°C aufgeschmolzen und homogenisiert.

Von den Formmassen wurden auf einer Spritzgußmaschine Stäbe der Abmessung 80 x 10 x 4 mm$^3$ (Verarbeitungstemperatur 260°C) hergestellt, an denen die Kerbschlagzähigkeit bei Raumtemperatur (Methode ISO 180 1A) und die Wärmeformbeständigkeit nach Vicat VST B 120 (DIN 53 460) gemessen wurde.

Die Benzinbeständigkeit (Spannungsrißverhalten) wurde an den Flachstäben 80 x 10 x 4 mm$^3$ gemäß DIN 53 449/3 untersucht. Als Kraftstoffsimulanz wurde eine Mischung aus 50 Gew.-% Toluol und 50 Gew.-% Isooctan verwendet. Die Probekörper wurden mittels einer Kreisbogenschablone vorgedehnt und 10 Minuten bei 23°C im Kraftstoffsimulanz gelagert. Die Vordehnung $\varepsilon_x$ betrug 2,4 %. Das Spannungsrißverhalten wurde über die Rißbildung bzw. den Bruch beurteilt.

Zusammensetzung und technologische Eigenschaften erfindungsgemäßer Formmassen finden sich in nachstehender Tabelle.

Wie der Tabelle entnommen werden kann, führt der Zusatz der erfindungsgemäßen Komponente D zu einer Verbesserung der Benzinbeständigkeit sowie der Zähigkeit, die Wärmeformbeständigkeit wird nur wenig beeinträchtigt (Vergleichsbeispiel 1, erfindungsgemäße Beispiele 2 bis 4).

Selbst bei Formmassen, die mit dem die Benzinbeständigkeit verbessernden Pfropfpolymerisat B.II (gemäß der Lehre der DE-OS 37 38 143) ausgerüstet sind, führt der Zusatz von D zu einer weiteren Verbesserung der Benzinbeständigkeit sowie der Zähigkeit (Vergleichsbeispiel 5, erfindungsgemäßes Beispiel 6).

<u>Zusammensetzung und Eigenschaften der Formmassen</u>

| Bsp. | Komponenten (Gew.-Teile) | | | | | | Kerbschlagzähigkeit ISO 180 1A [kJ/m²] | Vicat VST B 120 DIN 53 460 [°C] | Benzinbeständigkeit DIN 53 449/3 $\epsilon_R$ = 2,4 % |
|---|---|---|---|---|---|---|---|---|---|
| | A | B.I | B.II | C | D.II | D.I | | | |
| 1 [1)] | 50 | 30 | - | 20 | - | - | 52 | 112 | Bruch |
| 2 | 50 | 30 | - | 19 | 1 | - | 52 | 111 | leichte Risse |
| 3 | 50 | 30 | - | 18 | 2 | - | 58 | 111 | leichte Risse |
| 4 | 50 | 30 | - | 15 | 5 | - | 73 | 109 | ohne Befund |
| 5 [1)] | 50 | - | 30 | 20 | - | - | 37 | 113 | starke Risse |
| 6 | 50 | - | 30 | 15 | - | 5 | 48 | 111 | ohne Befund |

1) Vergleichsbeispiel

## Patentansprüche

1. Thermoplastische Formmassen, bestehend aus

A) 10 bis 96 Gew.-Teilen eines aromatischen Polycarbonats und/oder eines aromatischen Polyestercarbonats und/oder eines aromatischen Polyesters

B) 4 bis 90 Gew.-Teilen eines Pfropfpolymerisats von

B.1) 5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1) 50 bis 99 Gew.-Teilen mindestens eines Monomeren aus der Gruppe der Vinylaromaten und Methacrylsäure-$C_1$-$C_4$-Alkylester und

B.1.2) 1 bis 50 Gew.-Teilen mindestens eines Monomeren aus der Gruppe der Vinylcyanide, (Meth)Acrylsäure-$C_1$-$C_8$-Alkylester, sowie der ethylenisch ungesättigten Carbonsäuren und der davon abgeleiteten Derivate wie Anhydride und Imide, auf

B.2) 5 bis 95 Gew.-Teile einer vernetzten, teilchenförmigen elastomeren Pfropfgrundlage mit einem durchschnittlichen Teilchendurchmesser ($d_{50}$-Wert) von 0,05 bis 5 $\mu$m und einer Glasübergangstemperatur < 10°C, und

C) 0 bis 70 Gew.-Teilen eines thermoplastischen Vinylcopolymerisats aus

C.1) 50 bis 99 Gew.-Teilen mindestens eines Monomeren aus der Gruppe der Vinylaromaten und Methacrylsäure-$C_1$-$C_4$-Alkylester und

C.2) 1 bis 50 Gew.-Teilen mindestens eines Monomeren aus der Gruppe der Vinylcyanide, (Meth)Acrylsäure-$C_1$-$C_8$-Alkylester, sowie der ethylenisch ungesättigten Carbonsäuren und den davon abgeleiteten Derivaten wie Anhydride und Imide,

wobei die Summe der Gew.-Teile aus A + B + C 100 Gew.-Teile beträgt,

sowie, bezogen auf 100 Gew.-Teile aus A und B und gegebenenfalls C
D) 0,1 bis 30 Gew.-Teile eines Polymerisats bestehend aus

D.1) (Meth)Acrylsäure-$C_{10}$-$C_{40}$-Alkylestern wobei

D.2) bis zu 90 Gew.-% der Komponente D.1 durch Styrol ersetzt sein können,

und wobei die Polymerisate D) eine Sprödigkeitstemperatur von über + 2°C haben müssen, sowie gegebenenfalls E mindestens einen Zusatz aus der Gruppe der Stabilisatoren, Pigmente, Entformungsmittel, Fließhilfsmittel, Füll- und Verstärkungsstoffe, Flammschutzmittel und Antistatika.

**2.** Thermoplastische Formmassen gemäß Anspruch 1, dadurch gekennzeichnet, daß sie bezogen auf 100 Gew.-Teile A+B+C aus 30 bis 80 Gew.-Teilen der Komponente A, 10 bis 50 Gew.-Teilein der Komponente B und 0 bis 50 Gew.-Teilen der Komponente C bestehen.

**3.** Thermoplastische Formmassen gemäß Ansprüchen 1 und 2, dadurch gekennzeichnet, daß sie aus 100 Gew.-Teile A+B+C und 0,5 bis 20 Gew.-Teile der Komponente D bestehen.

**4.** Thermoplastische Formmassen gemäß Ansprüchen 1 bis 3, dadurch gekennzeichnet, daß die Komponente D.1 ein (Meth)Acrylsäure-$C_{16}$-$C_{26}$-Alkylester ist.

**5.** Thermoplastische Formmassen gemäß Ansprüchen 1 bis 4, dadurch gekennzeichnet, daß 10 bis 80 Gew.-% der Komponente D.1 durch Styrol ersetzt sind.

**6.** Thermoplastische Formmassen gemäß Ansprüchen 1 bis 5, dadurch gekennzeichnet, daß die Komponente B.1 aus B.1.1 Styrol, $\alpha$-Methylstyrol, kernsubstituiertem Styrol, Methylmethacrylat oder Mischungen daraus und B.1.2 (Meth)Acrylnitril, Methylmethacrylat, n-Butyl-acrylat, t-Butyl(meth)acrylat, Maleinsäureanhydrid, N-Alkyl- oder N-Aryl N-Aryl-substituiertem Maleinimid oder Mischungen daraus aufgebaut ist.

**7.** Thermoplastische Formmassen gemäß Ansprüchen 1 bis 6, dadurch gekennzeichnet, daß die Komponente C aus C.1 Styrol, α-Methylstyrol, kernsubstituiertem Styrol, Methylmethacrylat oder Mischungen daraus und C.2 (Meth) Acrylnitril, Methylmethacrylat, n-Butyl-acrylat, t-Butyl-(meth)acrylat, Maleinsäureanhydrid, N-Alkyl- oder N-Aryl-substituiertem Maleinimid oder Mischungen daraus aufgebaut ist.

**8.** Verwendung der Formmassen der Ansprüche 1 bis 7 zur Herstellung von Formkörpern.

**Claims**

**1.** Thermoplastic moulding compositions, consisting of

A) 10 to 96 parts by weight of an aromatic polycarbonate and/or an aromatic polyester carbonate and/or an aromatic polyester

B) 4 to 90 parts by weight of a graft polymer of

B.1) 5 to 95 parts by weight of a graft shell of vinyl monomer polymer, wherein the graft shell was obtained by graft polymerization of a monomer mixture of

B.1.1) 50 to 99 parts by weight of at least one monomer from the group consisting of aromatic vinyl compounds and $C_1$-$C_4$ alkyl methacrylates and

B.1.2) 1 to 50 parts by weight of at least one monomer from the group consisting of vinyl cyanides, $C_1$-$C_8$ alkyl (meth)acrylates and ethylenically saturated carboxylic acids and derivatives thereof, such as anhydrides and imides, on

B.2) 5 to 95 parts by weight of a crosslinked, particulate elastomeric graft base with an average particle diameter ($d_{50}$ value) of 0.05 to 5 µm and a glass transition temperature of < 10 °C, and

C) 0 to 70 parts by weight of a thermoplastic vinyl copolymer of

C.1) 50 to 99 parts by weight of at least one monomer from the group consisting of aromatic vinyl compounds and $C_1$-$C_4$ alkyl methacrylates and

C.2) 1 to 50 parts by weight of at least one monomer from the group consisting of vinyl cyanides, $C_1$-$C_8$ alkyl (meth)acrylates and ethylenically unsaturated carboxylic acids and derivatives thereof, such as anhydrides and imides,

wherein the sum of the parts by weight of A + B + C is 100 parts by weight,

and, related to 100 parts by weight of A and B and optionally C
D) 0.1 to 30 parts by weight of a polymer consisting of

D.1) $C_{10}$-$C_{40}$ alkyl (meth)acrylates, wherein

D.2) up to 90 wt.% of component D.1 may be replaced by styrene,

and wherein the polymers D) must have a brittleness temperature of more than + 2 °C,
and optionally E) at least one addition from the group consisting of stabilizers, pigments, mould release agents, flow auxiliary substances, fillers and reinforcing agents, flame retardants and antistatic agents.

**2.** Thermoplastic moulding compositions according to Claim 1, characterized in that, related to 100 parts by weight of A + B + C, they consist of 30 to 80 parts by weight of component A, 10 to 50 parts by weight of component B and 0 to 50 parts by weight of component C.

**3.** Thermoplastic moulding compositions according to Claims 1 and 2, characterized in that they consist of 100 parts by weight of A + B + C and 0.5 to 20 parts by weight of component D.

**4.** Thermoplastic moulding compositions according to Claims 1 to 3, characterized in that component D.1 is a $C_{16}$-$C_{26}$ alkyl (meth)acrylate.

**5.** Thermoplastic moulding compositions according to Claims 1 to 4, characterized in that 10 to 80 wt.% of component D.1 are replaced by styrene.

**6.** Thermoplastic moulding compositions according to Claims 1 to 5, characterized in that component B.1 is composed of B.1.1 styrene, α-methylstyrene, nucleus-substituted styrene, methyl methacrylate or mixtures thereof and B.1.2 (meth)acrylonitrile, methyl methacrylate, n-butyl acrylate, t-butyl (meth)acrylate, maleic anhydride, N-alkyl- or N-aryl-substituted maleic imide or mixtures thereof.

**7.** Thermoplastic moulding compositions according to Claims 1 to 6, characterized in that component C is composed of C.1 styrene, α-methylstyrene, nucleus-substituted styrene, methyl methacrylate or mixtures thereof and C.2 (meth)acrylonitrile, methyl methacrylate, n-butyl acrylate, t-butyl (meth)acrylate, maleic anhydride, N-alkyl- or N-aryl-substituted maleic imide or mixtures thereof.

**8.** Use of the moulding compositions of Claims 1 to 7 for the production of moulded bodies.

**Revendications**

**1.** Matières à mouler thermoplastiques consistant en :

A) 10 à 96 parties en poids d'un polycarbonate aromatique et/ou d'un polyester carbonate aromatique et/ou d'un polyester aromatique ;
B) 4 à 90 parties en poids, d'un polymère greffé de :

B.1) 5 à 95 parties en poids d'une greffe consistant en un polymère de monomères vinyliques, cette greffe étant obtenue par polymérisation greffée d'un mélange de monomères consistant lui-même en :

B.1.1) 50 à 99 parties en poids d'au moins un monomère pris dans le groupe des dérivés vinylaromatiques et des méthacrylates d'alkyle en $C_1$-$C_4$, et
B.1.2) 1 à 50 parties en poids d'au moins un monomère du groupe des cyanures de vinyle, des (méth) acrylates d'alkyle en $C_1$-$C_8$, des acides carboxyliques à insaturation éthylénique et leurs dérivés tels que les anhydrides et les imides, sur

B.2) 5 à 95 parties en poids d'un support de greffage élastomère réticulé, en particules à un diamètre moyen (valeur $d_{50}$) de 0,05 à 5 µm, ayant une température de transition du second ordre inférieure à 10°C, et

C) 0 à 70 parties en poids d'un copolymère vinylique thermoplastique de :

C.1.) 50 à 99 parties en poids d'au moins un monomère du groupe des dérivés vinylaromatiques et des méthacrylates d'alkyle en $C_1$-$C_4$, et
C.2) 1 à 50 parties en poids d'au moins un monomère du groupe des cyanures de vinyle, des (méth) acrylates d'alkyle en $C_1$-$C_8$, des acides carboxyliques à insaturation éthylénique et leurs dérivés tels que les anhydrides et les imides,

la somme des parties en poids de A + B + C représentant 100 parties en poids, et, pour 100 parties en poids de A et B, et le cas échéant C,
D) 0,1 à 30 parties en poids d'un polymère consistant en :

D.1.) des(méth)acrylates d'alkyle en $C_{10}$-$C_{40,}$
D.2) une proportion du composant D.1 allant jusqu'à 90 % en poids, pouvant être remplacée par le styrène,

les polymères D) devant avoir une température de fragilisation supérieure à + 2°C, et le cas échéant
E) au moins un additif du groupe des stabilisants, des pigments, des agents de démoulage, des produits auxiliaires fluidifiants, des matières de charge et matières renforçantes, des agents ignifugeants et des agents antistatiques.

2. Matières à mouler thermoplastiques selon la revendication 1, caractérisées en ce que, pour 100 parties en poids de A + B + C, elles consistent en 30 à 80 parties en poids du composant A, 0 à 50 parties en poids du composant B et 0 à 50 parties en poids du composant C.

3. Matières à mouler thermoplastiques selon les revendications 1 et 2, caractérisées en ce qu'elles consistent en 100 parties en poids de A + B + C et 0,5 à 20 parties en poids du composant D.

4. Matières à mouler thermoplastiques selon les revendications 1 à 3, caractérisées en ce que le composant D.1 est un (méth)acrylate d'alkyle en $C_{16}$-$C_{26}$.

5. Matières à mouler thermoplastiques selon les revendications 1 à 4, caractérisées en ce que 10 à 80 % en poids du composant D.1 sont remplacés par le styrène.

6. Matières à mouler thermoplastiques selon les revendications 1 à 5, caractérisées en ce que le composant B.1 est préparé à partir de B.1.1, du styrène, de l'α-méthylstyrène, un styrène substitué dans le noyau, du méthacrylate de méthyle ou leurs mélanges, et B.1.2, du (méth)acrylonitrile, du méthacrylate de méthyle, de l'acrylate de n-butyle, du (méth)acrylate de tert-butyle, de l'anhydride maléique, un maléimide à substituant alkyle ou aryle à l'azote, ou leurs mélanges.

7. Matières à mouler thermoplastiques selon les revendications 1 à 6, caractérisées en ce que le composant C est préparé à partir de C.1, du styrène, de l'α-méthylstyrène, un styrène substitué dans le noyau, du méthacrylate de méthyle ou leurs mélanges, et C.2, du (méth)acrylonitrile, du méthacrylate de méthyle, de l'acrylate de n-butyle, du (méth)acrylate de tert-butyle, de l'anhydride maléique, un maléimide portant un substituant alkyle ou aryle à l'azote, ou leurs mélanges.

8. Utilisation des matières à mouler thermoplastiques selon les revendications 1 à 7 pour la fabrication d'objets moulés.